# EUROPEAN PATENT APPLICATION

(11) **EP 1 600 598 A2**
(43) Date of publication of application: **30.11.2005**
(21) Application number: 05003375.2
(22) Date of filing: 17.02.2005
(51) Int. Cl.: E06B 9/72

(54) **Tube motor for use in motor-driven shutter or motor-driven blind**

(30) Priority: 13.05.2004 JP 2004142972
(71) Applicant: MINEBEA Co., Ltd., Kitasaku-gun, Nagano-ken (JP)
(72) Inventor: Masuda, Teruo, Miyagino-ku Sendai-shi Miyagi-ken (JP); Takahashi, Hitoshi, Miyagino-ku Sendai-shi Miyagi-ken (JP)
(74) Representative: Müller, Frank Peter

(57) **Abstract**

A pipe serving as a shell of a tube motor adapted to drive a rotary tube core of a motor-driven shutter or motor -driven blind is composed of two half pieces assembled together.

## Description

### BACKGROUND OF THE INVENTION

### Field of the Invention:

The present invention relates to a tube motor for use in a motor-driven shutter or motor-driven blind, and more particularly to a tube motor that allows easy assembly and disassembly thereof and easy replacement of components thereof.

### Description of the Related Art:

Conventionally, a tube motor for driving a rotary tube core of a motor-driven shutter or motor-driven blind is configured such that a motor body and other components are accommodated in a pipe that serves as a shell of the tube motor. The motor body includes a plurality of components that are arranged axially. The components are sequentially press-fitted into the pipe,and connected axially while being aligned with each other (arranged straight), whereby the motor body is assembled. Accordingly, the pipe is manufactured in the form of a single-piece component.

FIG. 6 shows such a conventional tube motor disclosed in, for example, Japanese Patent Application Laid-Open (*kokai*) No. H09-088458. In FIG. 6, reference numeral 04 denotes a tube motor. A pipe 05, which serves as a shell of the tube motor 04, assumes the form of an elongated single-piece component. The pipe 05 accommodates a motor body 06;a gear unit 07, which serves as a speed reducer; and a motor unit 08, which includes a capacitor and components for limit switches. The motor body 06 includes a plurality of motor body components, usually three motor body components 06a, 06b, and 06c, which can be axially disassembled.

The motor body components 06a and 06c are bracket structures disposed on opposite sides of the motor body 06 The motor body components 06a and 06c sandwich and fixedly hold a stator that partially constitutes the motor body component 06b, and rotatably support a rotary shaft of a rotor that partially constitutes the motor body component 06b.

Conventionally, the motor body components 06a to 06c, the gear unit 07, and the motor unit 08 are accommodated and assembled in the pipe 05 in the following manner.

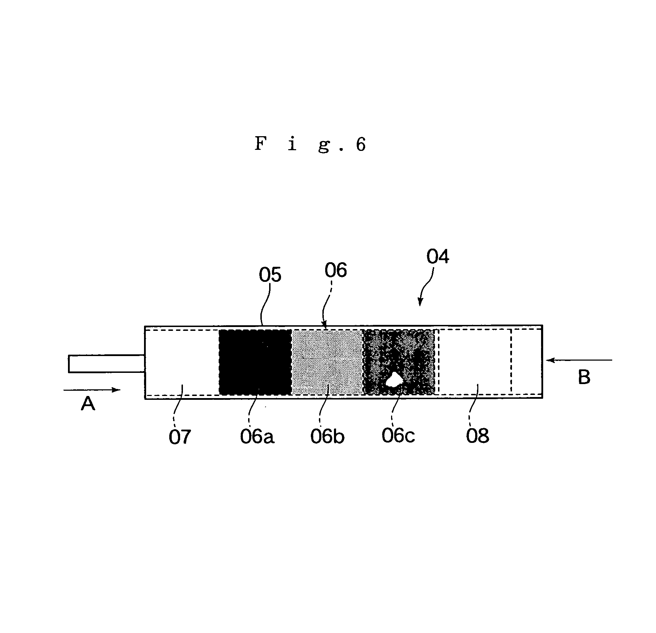

First, the gear unit 07 is inserted into the left end (as viewed in FIG. 6) of the pipe 05 in the direction of an arrow A and fixed therein. Next, the motor body component 06a is press-fitted into the pipe 05 in the direction of an arrow B and fixedly connected to the gear unit 07. Then, the motor body component 06b is press-fitted into the pipe05 in the direction of the arrow B and fixedly connected to the motor body component 06a. Subsequently, the motor body component 06c is press-fitted into the pipe 05 in the direction of the arrow B and fixedly connected to the motor body component 06b. Finally, the motor unit 08 is inserted into the right end (as viewed in FIG. 6) of the pipe 05 in the direction of arrow B and fixed therein.

Being press-fitted into the pipe 05 as mentioned above, the motor body components 06a to 06c are aligned with each other (arranged straight) and mutually connected, whereby the motor body 06 is completed.

However, in assembling the conventional tube motor 04, the motor body components 06a to 06c, the gear unit 07, and the motor unit 08 are inserted into the pipe 05, which assumes the form of a single-piece component. Thus, the assembly work involves the following problems: since the condition of the assembled components in the pipe 05 is not easy to inspect, the assembly work is difficult; and when any one of the components is to be replaced, all of the components must be removed from inside the pipe 05.

### SUMMARY OF THE INVENTION

An object of the present invention is to solve the above-mentioned problems ina conventional tube motor for use in a motor-driven shutter or motor-driven blind and to provide a tube motor for use in a motor-driven shutter or motor-driven blind that allows easy inspection of the assembled condition of motor components in a pipe to thereby facilitate assembly work, and allows easy replacement of the motor components.

To achieve the above object, the present invention provides a tube motor for use in a motor-driven shutter or motor-driven blind comprising a pipe that serves as a shell of the tube motor adapted to drive a rotary tube core of the motor-driven shutter or motor-driven blind. In the tube motor, the pipe is composed of two half pieces assembled together.

The above-mentioned configuration of the present invention allows the following procedure for installing motor body components, a gear unit, a motor unit, and other components in the pipe. The components are placed and assembled in one half piece of the pipe. Next, the other half piece of the pipe is placed on the former half piece so as to cover the accommodated components. Then, the two half pieces are joined together.

Since the components can be assembled in the pipe while the condition of assembling the components is observed, the work of assembling the components is remarkably facilitated. In the event of a need to replace any one of the components, the replacement work is remarkably facilitated, because the pipe can be disassembled to the half pieces so as to remove only a component to be replaced.

In the present invention, preferably, a motor body accommodated in the pipe comprises a plurality of components which can be axially disassembled, and the components are axially connected for integration in an axially aligned condition before being accommodated in the pipe.

Since the plurality of components of the motor body are axially connected for integration in an axially aligned condition before being accommodated in the pipe, there is no need to follow the conventional assembly procedure in which the components of the motor body are sequentially press-fitted into the pipe and assembled while being aligned with each other. This further encourages use of the pipe composed of two half pieces assembled together, and further enhances the above-described effect attained through use of the pipe composed of two half pieces assembled together.

### BRIEF DESCRIPTION OF THE DRAWINGS

FIG. 1 is a schematic configurational view of a motor-driven shutter to which a tube motor according to an embodiment of the present invention is applied;
FIG. 2 is a schematic view showing the assembled condition of the components of the tube motor with one half piece of a two-piece pipe removed;
FIG. 3 is an exploded view of the tube motor, showing a state in which the components of the tube motor are removed from the pipe;
FIG. 4 is a view showing a procedure for assembling the pipe;
FIGS. 5A to 5B are views showing means for joining two half pieces of the pipe; and
FIG. 6 is a view showing a conventional tube motor.

### DESCRIPTION OF THE PREFERRED EMBODIMENT

An embodiment of the present invention will next be described in detail with reference to the drawings.

A motor-driven shutter to which a tube motor of the present embodiment is applied is configured as briefly described below.

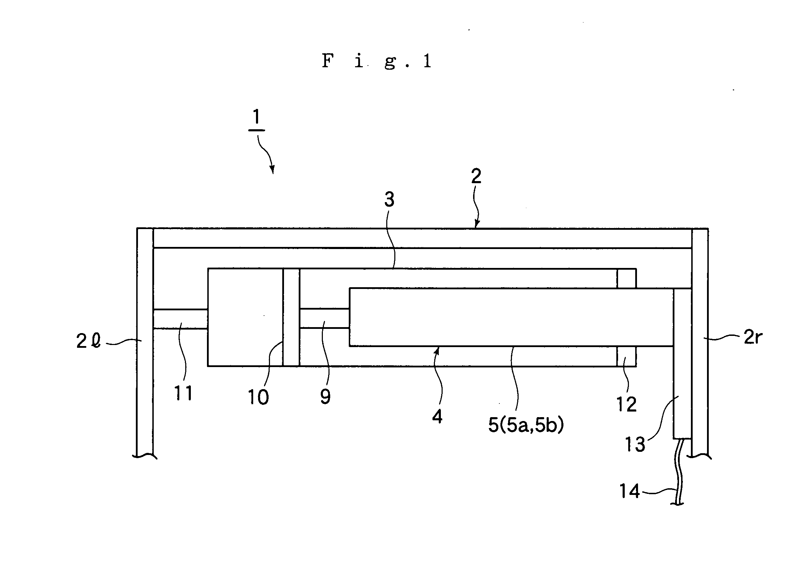

In FIG. 1, reference numeral 1 denotes the motor-driven shutter. FIG. 1 schematically shows an upper frame portion of the motor-driven shutter as viewed after removing a shutter body (not shown) from a shutter-winding drum 3. The shutter-winding drum 3 is rotatably supported between right and left vertical frames 2r and 2l of a frame 2. The frame 2 serves as a cover of the motor-driven shutter 1. The shutter-winding drum 3 is rotatably driven by a tube motor 4. Since the shutter-winding drum 3 serves as a rotary, tubular core for the shutter body, the shutter-winding drum 3 is also called a rotary tube core.

The tube motor 4 has an appearance of an elongated circular cylinder. The tube motor 4 is fixedly attached to the right vertical frame 2r in such a manner that a right end portion (as viewed in FIG. 1) thereof projects from the shutter-winding drum 3 while the remaining portion thereof is accommodated in the shutter-winding drum 3. An output shaft 9, which projects from the left end (as viewed in FIG. 1) of the tube motor 4, is located within the shutter-winding drum 3 and connected to a rotation-transmitting member 10, which is united to the shutter-winding drum 3. Rotational output of the tube motor 4 is transmitted to the shutter-winding drum 3 via the rotation-transmitting member 10. Accordingly, the tube motor 4 and the shutter-winding drum 3 can rotate relative to each other.

A drum rotary-shaft 11 is provided in a projecting condition on the left end face (as viewed in FIG. 1) of the shutter-winding drum 3. The drum rotary-shaft 11 is supported by a bearing member (not shown) provided on the left vertical frame 21. As schematically shown in FIG. 1, an internal gear 12 is provided at a right end portion of the shutter-winding drum 3 to be located between the shutter-winding drum 3 and the tube motor 4. The shutter-winding drum 3 rotates in a sliding relation with the tube motor 4 via the internal gear 12.

Upon reception of rotational output of the tube motor 4 via the rotation-transmitting member 10, the shutter-winding drum 3 rotates while being supported as follows: the drum rotary-shaft 11 is supported by the bearing member provided on the left vertical frame 21, and a right end portion of the shutter-winding drum 3 located opposite the drum rotary-shaft 11 is supported by the tube motor 4 via the internal gear 12. As the shutter-winding drum 3 rotates forward or in reverse, the shutter is fed downward or wound up.

A fixing member 13 fixedly attached to a right end portion (as viewed in FIG. 1) of the tube motor 4 is fixed on the right vertical frame 2r by means of, for example, screws, thereby fixing the tube motor 4 in place. The fixing member 13 accommodates components for limit switches; and a cable 14 for supplying power to the tube motor 4 extends therefrom.

Next, the structure of the tube motor 4 will be described in detail.

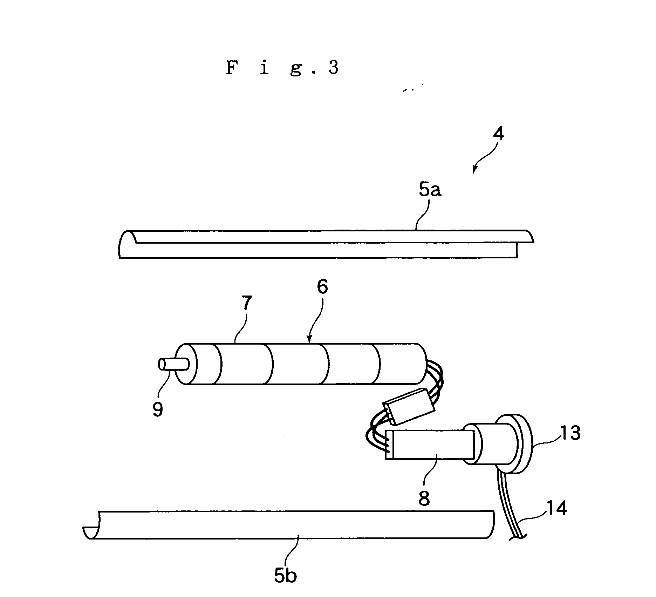

As in the case of a conventional tube motor, the tube motor 4 is configured such that an elongated pipe 5 accommodates a motor body 6, a gear unit 7, and a motor unit 8 (FIGS. 1 to 3). The pipe 5 serves as a shell of the tube motor 4; the gear unit 7 serves as a speed reducer; and the motor unit 8 includes a capacitor and components for limit switches.

The motor body 6 includes a plurality of motor body components, usually three motor body components 6a, 6b, and 6c, which can be axially disassembled. The motor body components 6a and 6c are bracket structures disposed on opposite sides of the motor body 6. The motor body components 6a and 6c sandwich and fixedly hold a stator that partially constitutes the motor body component 6b, and rotatably support a rotary shaft of a rotor that partially constitutes the motor body component 6b.

The motor body components 6a to 6c are of the same diameter and assume a circular cross section. The motor body components 6a to 6c are unitarily connected beforehand in an axially aligned condition by means of a binder without use of screws, thereby being assembled beforehand into the motor body 6. The motor body 6 is small-sized and robust; has a simple structure; is easy to assemble; and allows the shutter-winding drum 3 to have a reduced inside diameter. The motor body 6 having such a structure is described in detail in Japanese Patent Application Laid-Open (*kokai*) No. 2002-186213 filed by the applicant of the present invention.

The motor body 6 used in the present embodiment is not limited to the type having the above-described structure. For example, the motor body 6 may be of such a type that the motor body components 6a to 6c are assembled into the motor body 6 after being accommodated in the pipe 5.

The pipe 5 of the tube motor 4 of the present embodiment assumes the form of an assembly of two axially split half pieces 5a and 5b.

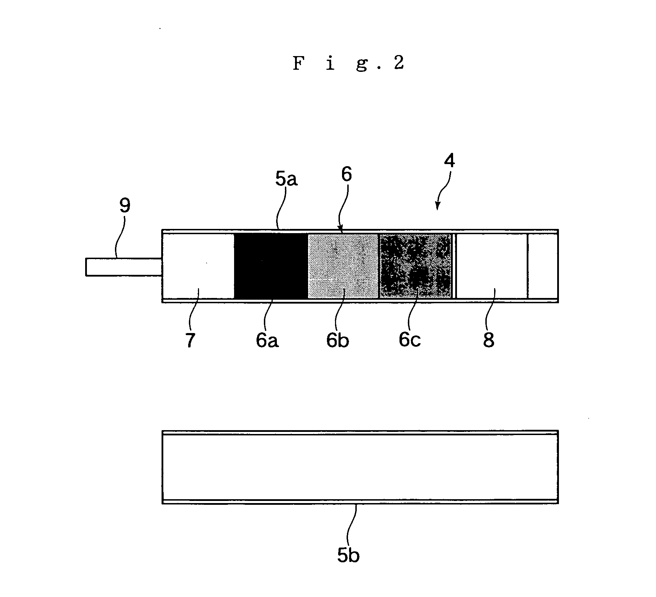

In the course of installation, in the pipe 5, of the motor body 6, the gear unit 7, which serves as a speed reducer, and the motor unit 8, which includes a capacitor and components for limit switches, the pipe 5 is disassembled into the two half pieces 5a and 5b. Then, for example, the gear unit 7, the motor body 6, and the motor unit 8 are sequentially, from left to right in FIG. 2, placed in the half piece 5a. Subsequently, a predetermined joining and connection work is performed. Since the pipe 5 is disassembled into the two half pieces 5a and 5b, the connecting work can be carried out while the conditions of the components are observed, and is thus facilitated.

Particularly, in installation of the motor body 6 in the pipe 5, the motor body components 6a to 6c are placed in this order in the half piece 5a; aligned with each other (arranged straight) while the conditions of the components are observed; and connected in a required condition. The work of connection in the half piece 5a becomes unnecessary in the case where, before installation in the pipe 5, the motor body components 6a to 6c are axially connected in an aligned condition to thereby be assembled into the motor body 6.

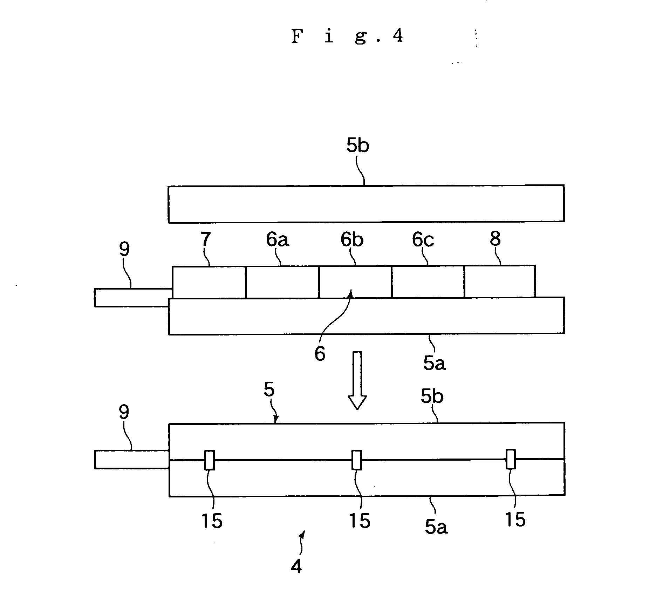

When the above-mentioned installation of the motor components in the half piece 5a is completed, as shown in FIG. 4, the other half piece 5b is placed on the half piece 5a so as to cover the accommodated motor components. Then, the two half pieces 5a and 5b are joined together by means of clamp members 15. The tube motor 4 is thus completed.

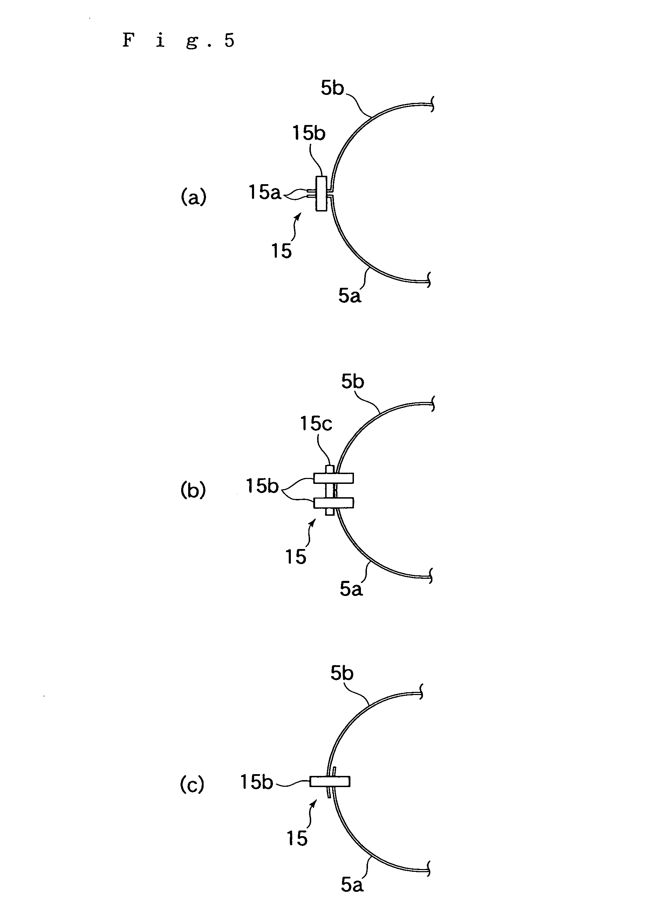

Various methods are available for joining the two half pieces 5a and 5b by means of the clamp members 15. For example, as shown in FIG. 5A, tongues 15a project from corresponding abutment portions of the half pieces 5a and 5b, and the tongues 15a are joined together by use of screws 15b; as shown in FIG. 5B, a metal plate 15c is placed on the boundary between the two half pieces 5a and 5b, and opposite end portions of the metal plate 15c are screwed on the corresponding half pieces 5a and 5b by use of the corresponding screws 15b; and as shown in FIG. 5C, abutment portions of the half pieces 5a and 5b are caused to overlap each other, and the overlapping portions are joined together by use of the screws 15b.

Since the tube motor 4 of the present embodiment is configured as described above, the tube motor 4 yields the effects described below.

Since a two-piece structure composed of the two half pieces 5a and 5b is applied to the pipe 5, which serves as a shell of the tube motor 4 for use in the motor-driven shutter 1, the following procedure can be employed for installing, in the pipe 5, the motor body components 6a to 6c, the gear unit 7, the motor unit 8, and other components. The components are placed and assembled in the half piece 5a or 5b of the pipe 5. Next, the other half piece 5a or 5b is placed on the former half piece 5a or 5b so as to cover the accommodated components. Then, the two half pieces 5a and 5b are joined together.

Since the components can be assembled in the pipe 5 while the condition of assembling the components is observed, the work of assembling the components is remarkably facilitated. Moreover, in the event of a need to replace of any one of the components, the replacement work is remarkably facilitated, because the pipe 5 can be disassembled to the half pieces 5a and 5b so as to remove only a component to be replaced.

In the case where the motor body 6 accommodated in the pipe 5 is composed of the plurality of motor body components 6a to 6c which can be axially disassembled, and the motor body components 6a to 6c are axially connected for integration in an axially aligned condition before being accommodated in the pipe 5, there is no need to follow the conventional assembly procedure in which the motor body components 6a to 6c of the motor body 6 are sequentially press-fitted into the pipe 5 and assembled while being aligned with each other. This further encourages use of the pipe 5 composed of the two half pieces 5a and 5b assembled together, and further enhances the above-described effect attained through use of the pipe 5 composed of the two half pieces 5a and 5b assembled together.

The present invention is not limited to the above embodiment, but may be embodied in various other forms without departing from the scope of the invention.

For example, the tube motor 4 may be applied to a motor-driven blind instead of the motor-driven shutter 1. Even in this case, the above-mentioned effects are similarly yielded.

## Claims

1. A tube motor for use in a motor-driven shutter or motor-driven blind, comprising:
a pipe serving as a shell of the tube motor adapted to drive a rotary tube core of the motor-driven shutter or motor-driven blind;
wherein the pipe is composed of two half pieces assembled together.

2. A tube motor for use in a motor-driven shutter or motor-driven blind according to claim 1, wherein a motor body accommodated in the pipe comprises a plurality of components which can be axially disassembled, and the components are axially connected for integration in an axially aligned condition before being accommodated in the pipe.
